# EUROPÄISCHE PATENTSCHRIFT

(11) **EP 3 239 022 B1**
(45) Veröffentlichungstag und Bekanntmachung des Hinweises auf die Patenterteilung: **24.07.2019**
(21) Anmeldenummer: 17167726.3
(22) Anmeldetag: 24.04.2017
(51) Int. Cl.: B62D 21/16, B62D 63/02, B60P 3/36, B62D 31/02

(54) **PLATTFORMVERBUND**
PLATFORM SYSTEM
COMPOSITE DE PLATEFORME

(30) Priorität: 28.04.2016 DE 202016102288 U; 12.05.2016 DE 202016102565 U
(43) Veröffentlichungstag der Anmeldung: 01.11.2017
(73) Patentinhaber: Alois Kober GmbH, 89359 Kötz (DE)
(72) Erfinder: STÖTTER, Stephan, 86479 Aichen (DE)
(74) Vertreter: Ernicke, Klaus Stefan

(56) Entgegenhaltungen:
- WO-A1-2004/000633
- US-A- 5 501 504
- US-A1- 2005 134 033
- US-A1- 2011 121 554
- US-B1- 7 338 109

## Beschreibung

Die Erfindung betrifft einen Plattformverbund für ein Fahrzeugchassis mit den Merkmalen im Oberbegriff des Hauptanspruchs.

Die US 7,338,109 B1 zeigt ein Wohnmobil im LKW-Format mit Slideout und Heckantrieb, das ein vorgefertigtes Fahrzeugchassis aufweist, auf dem ein assemblierter Fahrzeugrahmen aufgesetzt und montiert wird. Das Fahrzeugchassis ist als schweres split-rail-chassis mit parallelen oberen und unteren Schienenpaaren aus massiven C-förmigen Metallprofilen ausgebildet und nimmt die Vorder- und Hinterachse auf. Der aufgesetzte Fahrzeugrahmen ist als starker, verwindungssteifer und dreidimensionaler Spaceframe in Gitterbauweise aus Stahlträgern ausgebildet, der auch integrierte untergehängte Stauräume umfasst. Diese werden von quer verlaufenden Stahlschotts gebildet, die von einem oberen Gitterrahmen des Spaceframe abgehängt sind, an deren Unterseite Bodenplatten befestigt sind.

Ein Plattformverbund für ein Fahrzeugchassis eines Wohnmobils ist aus der EP 2 738 068 A1 bekannt. Er weist zwei parallele Längsträger und mehrere Querträger sowie eine obere und untere Plattform auf, die als Sandwichplatten ausgeführt und miteinander verbunden sind. Die parallelen Plattformen sind zur Bildung von inneren Stauräumen über einen signifikanten Abstand voneinander distanziert. Sie sind dabei an den oberen und unteren Rändern der Längsträger und der Querträger anliegend befestigt und abgestützt. Die Längsträgerhöhe entspricht dem Abstand der Plattformen. In den Längsträgeren sind Zugangsöffnungen für die inneren Stauräume zwischen den Plattformen ausgespart.

Einen anderen Plattformverbund für ein Fahrzeugchassis mit Längsträgern in Form von abgekanteten Blechprofilen zeigt die DE 20 2013 100 573 U1.

Es ist Aufgabe der vorliegenden Erfindung, einen verbesserten Plattformverbund aufzuzeigen.

Die Erfindung löst diese Aufgabe mit den Merkmalen im Hauptanspruch.

Der beanspruchte Plattformverbund hat den Vorteil einer besseren Raumausnutzung und Gewichtsreduzierung bei hoher Festigkeit und Versteifung. Der beanspruchte Plattformverbund weist zumindest eine untere Plattform, eine Stützeinrichtung und einen oder mehrere Längsträger auf. Der Längsträger ist schwebend und mit Abstand oberhalb der unteren Plattform angeordnet. Der Längsträger kann an der Stützeinrichtung abgestützt und ggf. auch befestigt werden.

Der Plattformverbund ist frontseitig mit einem motorisierten, vorzugsweise frontgetriebenen, Zugkopf verbindbar bzw. verbunden. Dies kann mittels eines Adapters geschehen, wobei der Plattformverbund einen Beschlag zur festen Verbindung eines oder mehrerer Längsträger und/oder anderer Teile des Plattformverbunds mit einem Adapter aufweist. Der ggf. mehrfach vorhandene Adapter kann eine tragende Verbindung zum Zugkopfchassis, insbesondere dessen Längsträger(n) herstellen.

Der steife und gewichtsarme Plattformverbund kann eine Achsanordnung, insbesondere eine nicht angetriebene Hinterachsanordnung, eines Fahrzeugs aufnehmen.

Die mit der unteren Plattform fest verbundene Stützeinrichtung kann unterschiedlich ausgebildet sein. Sie kann einen oder mehrere Querträgern und/oder eine Achsabstützung der Achsanordnung aufweisen. Diese kann von einzelnen und seitlich distanzierten Radhäusern oder einem steifen und bevorzugt H-förmigen Tragrahmen gebildet werden. Ein frontseitiger Beschlag zur Befestigung des oder der Längsträger(s) an einem Zugkopf und/oder eine Frontanbindung des Plattformverbunds an einen Zugkopf kann ebenfalls Bestandteil der Stützeinrichtung sein.

Der Plattformverbund kann außerdem eine obere Plattform aufweisen. Diese kann einen Aufbauboden bilden. Sie kann bereits bei der Herstellung des Plattformverbunds vorhanden sein oder kann auch nachträglich montiert werden. Dies kann bei einem anderen Hersteller, z.B. einem Aufbau- oder Fahrzeughersteller erfolgen.

Der Plattformverbund mit dem oder den Längsträger(n), der Stützeinrichtung sowie einer unteren Plattform kann ein Basismodul darstellen. Dieses kann bei entsprechend steifer Ausbildung der unteren Plattform und deren fester Verbindung, z.B. Verklebung, mit der Stützeinrichtung selbsttragend sein. Für die Stabilität ist auch eine formschlüssige Verbindung und ggf. gegenseitige Befestigung der Stützeinrichtung und des oder der Längsträger von Vorteil. Die Längsträger und evtl. Querträger können ein großflächig versteifendes Stützgitter für die untere Plattform und den Plattformverbund bilden.

Die obere Plattform wird dann bei der Komplettierung des Plattformverbunds zum Endmodul für die Stabilitität nicht mehr oder nur in geringerem Umfang benötigt und kann ggf. schwächer ausgeführt sein sowie nach anderen Kriterien optimiert werden. Die obere Plattform und der/die Längsträger und ggf. die Querträger können aufeinander liegen und aneinander befestigt werden, z.B. durch Kleben etc..

Die obere Plattform kann vom Längsträger gezielt versteift werden. Eine Erstreckung des Längsträgers in Längsrichtung des Fahrzeugchassis bzw. des Fahrzeugs und bevorzugt über den Großteil oder die gesamte Plattformlänge ist hierfür von Vorteil.

Das Basismodul kann auch die selbsttragende Grundkomponente eines Fahrzeugchassis bilden. Es kann von einem Plattform- oder Chassishersteller, ggf. zusammen mit einem verbundenen Zugkopf, an einen Aufbau- oder Fahrzeughersteller geliefert werden.

Die ein oder mehreren Längsträger haben eine Trägerhöhe, die kleiner als die Stützhöhe der Stützeinrichtung bzw. der Abstand der unteren zur oberen Plattform ist. Die verringerte Trägerhöhe spart Masse und Gewicht. Der schwebend angeordnete Längsträger reicht nicht bis zur unteren Plattform und lässt dadurch einen Zugang zu innenliegenden Zwischenräumen oder Freiräumen zwischen den beabstandeten und bevorzugt parallelen Plattformen frei. Aus diesen Spar- und Zugangsgründen ist auch eine filigrane Ausbildung der Stützeinrichtung von Vorteil. Die Zugangsbreite kann eine signifikante Größe und Nutzbarkeit haben.

Der Längsträger kann als Hohlkammerprofil ausgebildet sein. Dies bietet mehrere Funktionen und Vorteile. Das Hohlkammerprofil kann eine oder mehrere Leitungen oder Rohre aufnehmen, führen und schützen. Eine Profilöffnung nach oben ist hierfür günstig. Das besagte Basismodul hat den Vorteil, dass die Leitungen erst mit dem Aufbau und vor der Montage der oberen Plattform eingebracht werden können.

Ein räumliches Hohlkammerprofil kann ein hohes Flächenträgheitsmoment haben. Durch eine geeignete Formgebung kann eine gesteigerte Steifigkeit und Festigkeit bei kleiner Bau- und Trägerhöhe und verringertem Materialeinsatz erzielt werden. Der Trägerwerkstoff kann aus einer breiten Palette geeigneter Materialien gewählt und hinsichtlich der Erfordernisse optimiert werden. Ferner kann die Störkontur gegenüber dem Stand der Technik verbessert werden. Das Leergewicht des Plattformverbunds und des damit ausgerüsteten Fahrzeugchassis bzw. Fahrzeugs kann verringert werden.

Der Längsträger ist in der bevorzugten Ausführungsform als Hutprofil ausgebildet und kann einen Omega-förmigen Querschnitt haben. Alternativ ist eine andere hohle Querschnittsform, z.B. als C- oder U-Profil, möglich.

Der beanspruchte Plattformverbund kann seine Steifigkeit aus dem steifen Basismodul und zusätzlich aus der Befestigung der oberen Plattform und deren Versteifung durch den/die Längsträger erzielen. Die Verbindung der Plattformen und deren Distanzierung wird vor allem durch die Stützeinrichtung, z.B. Querträgern und/oder einer Achsabstützung, realisiert, die hierfür in geeigneter Weise ausgebildet sein können, z.B. durch eine Plattenform und aufrechte Lage. Die Längsträger können von der direkten Verbindungsfunktion und der gegenseitigen Abstützung der Plattformen entlastet werden.

Der steife und gewichtsarme Plattformverbund kann in der Ausbildung als Basismodul und als Endmodul ein wesentlicher und tragender Bestandteil eines Fahrzeugchassis sein. Er kann auch eine Achsanordnung, insbesondere Hinterachsanordnung, eines Fahrzeugs aufnehmen. Hierfür ist es günstig, wenn die Achsabstützung parallele und axial ausgerichtete Achsträger aufweist, die am unteren und ggf. oberen Rand mit einer oder beiden Plattformen und stirnseitig mit jeweils einem Querträger oder einer verkürzten Querwand eines Radkastens fest verbunden sind. Hierdurch kann eine steife Tragzelle für die Aufnahme und Abstützung der Achsanordnung und der eingeleiteten dynamischen Belastungen im Fahrbetrieb gebildet werden. Ein Achsträger und/oder eine Querwand der Achsabstützung können einen tragenden Bestandteil der Stützeinrichtung bilden und einen Längsträger aufnehmen und abstützen.

Ein oder mehrere Teile des Plattformverbunds können an einer Verbindungsstelle eine Versteifung, z.B. einen Stützmanschette, aufweisen. Dies können insbesondere lastaufnehmende Teile, z.B. ein Achsbock und/oder ein Beschlag, sein. Die versteifte Verbindungsstelle kann an einer Anbindung zur unteren Plattform oder an anderer Stelle angeordnet sein. Die Versteifung kann zur mechanischen Stabilierung und zur zusätzlichen Befestigung dienen.

Für die Ausgestaltung der Achsanordnung bestehen große Freiheiten. Insbesondere kann eine Einzelradaufhängung mit Radlenkern und einem Achsrohr oder einem Stützträger zum Einsatz kommen. Die versteiften und bevorzugt plattenförmigen Achsträger können jeweils einen Achsbock bevorzugt außenseitig aufnehmen. Die Längsträger können von diesen Stützfunktionen für die Achsanordnung und die eingeleiteten Kräfte entlastet werden.

Das Fahrzeugchassis mit dem Plattformverbund kann z.B. als Anbauchassis ausgebildet sein. Dieses kann bei der Erstausrüstung oder nachträglich oder im Austausch gegen ein vorhandenes Fahrgestell mit dem Zugkopf verbunden werden kann. Das Fahrzeugchassis und der Zugkopf können als Einzelkomponenten von verschiedenen Produzenten stammen und können bei einem Dritten, insbesondere einem Fahrzeughersteller, montiert und mit einem Aufbau versehen werden.

Der beanspruchte Plattformverbund eignet sich besonders für Fahrzeugchassis mit einem kastenförmigen Aufbau, wobei die versteifte obere Plattform den Aufbauboden oder einen Teil hiervon bildet. Ein hiermit ausgerüstetes Fahrzeug kann z.B. ein Freizeitmobil, insbesondere Wohnmobil, oder ein Nutzfahrzeug, insbesondere Verkaufs- oder Präsentationsfahrzeug, sein. Der steife, leichtgewichtige und innere Freiräume bietende Plattformverbund ist hierfür besonders vorteilhaft.

Der beanspruchte Plattformverbund ist eine eigenständige Erfindungskomponente. Er kann eigenständig hergestellt und geliefert werden, z.B. an einen Chassishersteller. Das mit dem Plattformverbund ausgerüstete Fahrzeugchassis und das Fahrzeug stellen ebenfalls jeweils eigene Erfindungskomponenten dar.

In den Unteransprüchen sind weitere vorteilhafte Ausgestaltungen der Erfindung angegeben.

Ferner können der beanspruchte Plattformverbund und das damit ausgerüste Fahrzeugchassis sowie das Fahrzeug folgende Merkmale jeweils einzeln oder in beliebiger Kombination untereinander und mit den beanspruchten Merkmalen aufweisen.

Die Stützeinrichtung kann von einer Achsabstützung einer Achsanordnung gebildet werden. Die Achsabstützung kann von einzelnen Radkästen oder von einem Trägerrahmen gebildet werden.

Eine Achsabstützung kann mehrere parallele und axial ausgerichtete Achsträger aufweisen.

Ein Achsträger einer Achsabstützung kann mit der unteren Plattform des Plattformverbunds und stirnseitig mit jeweils einem Querträger oder mit einer verkürzten Querwand eines Radkastens fest verbunden sein, vorzugsweise aneinander befestigt sein.

Ein Achsträger einer Achsabstützung kann jeweils seitlich angrenzend neben einem Längsträger des Plattformverbunds angeordnet und mit diesem fest verbunden sein, vorzugsweise aneinander befestigt sein.

Ein Achsträger einer Achsabstützung kann eine Plattenform aufweisen.

An einem Achsträger einer Achsabstützung kann jeweils ein Achsbock mit einem Radlenker, insbesondere Längslenker, angeordnet und befestigt sein.

Die Stützeinrichtung des Plattformverbunds kann von einem oder mehreren Querträgern gebildet werden. Die Querträger können mit einer unteren Plattform des Plattformverbunds verbunden sein. Sie können an oder der unteren Plattform angeordnet und abgestützt sein.

Der Plattformverbund kann mindestens einen, vorzugsweise mehrere Längsträger aufweisen. Bei einer Mehrfachanordnung sind die Längsträger bevorzugt parallel angeordnet.

Ein Längsträger des Plattformverbunds kann in einem seitlichen Abstand (S) zu den Stirnseiten der Stützeinrichtung bzw. zum Seitenrand des Plattformverbunds angeordnet sein.

Ein Längsträger und die obere Plattform des Plattformverbunds können aneinander befestigt, insbesondere verklebt sein.

Ein Längsträger kann die obere Plattform des Plattformverbunds versteifen.

Die ein oder mehreren Längsträger des Plattformverbunds können an einem oder mehreren Querträgern an dessen/deren Oberseite aufgenommen und schwebend mit Abstand oberhalb der unteren Plattform angeordnet sein.

Ein Längsträger des Plattformverbunds kann eine Trägerhöhe (L) aufweisen, die kleiner als die Trägerhöhe (Q) der Querträger ist.

Die ein oder mehreren Längsträger des Plattformverbunds können an einem oder mehreren Querträgern versenkt aufgenommen sein, wobei die Oberseiten der Längsträger und der Querträger im wesentlichen auf gleicher Höhe liegen.

Die ein oder mehreren Längsträger des Plattformverbunds können in einer randseitigen Ausnehmung an den Querträgern formschlüssig aufgenommen sein.

Die obere Plattform des Plattformverbunds kann nachträglich montierbar bzw. montiert sein.

Die untere Plattform des Plattformverbunds kann eine größere Steifigkeit als die obere Plattform aufweisen.

Die untere Plattform des Plattformverbunds kann mit einem bevorzugt über ihre Länge durchgehenden Stützträger versteift sein. Der Stützträger kann an der Unterseite der unteren Plattform angeordnet sein.

Ein Längsträger des Plattformverbunds kann sich über den größten Teil, vorzugsweise über die gesamte Länge, des Plattformverbunds erstrecken.

Ein Längsträger des Plattformverbunds kann als steifes Profil, insbesondere Hohlkammerprofil, aus einem festen Werkstoff, insbesondere Metall, bevorzugt Stahl oder Leichtmetall, oder einem verstärkten Kunststoff, insbesondere GFK, ausgebildet sein.

Einer oder mehrere Querträger der Stützeinrichtung können eine Plattenform aufweisen und aufrecht angeordnet sein.

Einer oder mehrere Querträger der Stützeinrichtung können als massive oder gelochte ein- oder mehrlagige Platte aus Kunststoff und/oder Metall ausgebildet sein.

Zwischen den distanzierten, insbesondere parallelen, Plattformen und der Stützeinrichtung des Plattformverbunds kann ein Zwischenraum, insbesondere ein Stauraum oder ein Aufnahmeraum für Einbauten, ausgebildet sein.

Der Plattformverbund kann einen Adapter zur festen Verbindung mit einem motorisierten, bevorzugt frontgetriebenen, Zugkopf, insbesondere mit dessen Zugkopfchassis, aufweisen.

Der Plattformverbund kann eine Frontanbindung eines zwischen den distanzierten, insbesondere parallelen, Plattformen und der Stützeinrichtung des Plattformverbunds ausgebildeten Zwischenraums zu einem motorisierten, bevorzugt frontgetriebenen, Zugkopf (5) aufweisen.

Der Plattformverbund kann auf seiner Oberseite einen Aufbau, insbesondere einen Kastenaufbau, aufnehmen.

Die obere Plattform des Plattformverbund kann von einem Boden des Aufbaus gebildet werden.

Der Plattformverbund kann heckseitig mit einem Heckrahmen verbunden sein.

Zumindest eine Plattform des Plattformverbunds kann eine seitliche Ausnehmung, insbesondere einen Radausschnitt, aufweisen.

Ein oder mehrere Teile des Plattformverbunds, insbesondere ein Achsbock und/oder ein Beschlag, können an einer Verbindungsstelle eine Versteifung aufweisen.

Ein Fahrzeugchassis mit einem Plattformverbund kann einen Heckrahmen aufweisen.

Ein Fahrzeugchassis mit einem Plattformverbund kann als Anbauchassis für einen motorisierten, bevorzugt frontgetriebenen, Zugkopf ausgebildet sein.

Ein Fahrzeugchassis mit einem Plattformverbund kann einen Aufbau, insbesondere einen Kastenaufbau, aufweisen.

Ein Fahrzeug mit einem Plattformverbund kann einen Aufbau, insbesondere einen Kastenaufbau, aufweisen.

Ein Fahrzeug mit einem Plattformverbund kann als Freizeitmobil, insbesondere Wohnmobil, oder als Nutzfahrzeug, insbesondere Verkaufs- oder Präsentationsfahrzeug, ausgebildet sein.

Die Erfindung ist in den Zeichnungen beispielhaft und schematisch dargestellt. Im Einzelnen zeigen:
- Figur 1:: ein Fahrzeug mit einem Fahrzeugchassis und einem Plattformverbund in einer ersten Variante und in einer schematischen Seitenansicht,
- Figur 2:: eine Draufsicht auf die Anordnung von Figur 1 gemäß Pfeil II,
- Figur 3 bis 5:: Schnitte durch die Anordnung von Figur 1 gemäß Schnittlinien III-III, IV-IV und V-V,
- Figur 6:: eine perspektivische rückseitige Ansicht der Anordnung von Figur 1,
- Figur 7:: eine andere perspektivische Ansicht der Anordnung von Figur 1 mit gestrichelter Darstellung der inneren Teile des Plattformverbunds,
- Figur 8:: eine perspektivische Ansicht der Anordnung von Figur 1 mit abgenommener oberer Plattform,
- Figur 9:: eine zweite Variante des Plattformverbund mit oberer Plattform und Gurtbock in perspektivische Ansicht,
- Figur 10:: eine andere perspektivische Ansicht von Teilen der Anordnung von Figur 9,
- Figur 11:: eine Draufsicht der Anordnung von Figur 10,
- Figur 12:: eine Seitenansicht zu Figur 11,
- Figur 13 und 14:: Schnitte durch die Anordnung von Figur 12 gemäß Schnittlinien XIII-XIII und XIV-XIV und
- Figur 15 und 16:: perspektivische Ansichten des Plattformverbunds mit lokalen Versteifungen.

Die Erfindung betrifft einen Plattformverbund (6). Die Erfindung betrifft ferner einen mit einem solchen Plattformverbund (6) ausgerüstetes Fahrzeugchassis (2) und ein mit einem solchen Fahrzeugchassis (2) und einem Plattformverbund (6) ausgerüstetes Fahrzeug (1).

Das Fahrzeug (1) ist vorzugsweise ein Straßenfahrzeug und weist ein Fahrzeugchassis (2) mit einem Plattformverbund (6), einer hinteren Achsanordnung (9) und einem Aufbau (4) auf. Das Fahrzeug (1) hat vorzugsweise einen Frontantrieb und eine angetriebene Vorderachse. Die hintere Achsanordnung (9) wird vorzugsweise nicht angetrieben. Sie kann eine, zwei oder mehr Achsen mit Rädern aufweisen. Der Plattformverbund (6) bildet z.B. einen tragenden Bestandteil des Fahrzeugchassis (2). Das Fahrzeugchassis (2) kann außerdem weitere Komponenten, z.B. einen Heckrahmen (3) bzw. eine Heckverlängerung aufweisen.

Das Fahrzeugchassis (2) ist in dem gezeigten Ausführungsbeispiel als Anbauchassis ausgebildet. Das Fahrzeugchassis (2) und sein Plattformverbund (6) werden mit dem Fahrgestell eines frontgetriebenen Zugkopfes (5) über Adapter (7), insbesondere Schraubadapter, fest verbunden. Hierbei kann auch ein Höhenversatz bewirkt werden. Der Zugkopf (5) weist einen Motor nebst Getriebe, Tank und Abgasanlage, eine angetriebene Vorderachse, eine Lenkeinrichtung, eine Bremseinrichtung und Frontsitze auf. Der Zugkopf (5) kann eine eigene Fahrerkabine aufweisen. Diese kann alternativ in den Aufbau (4) integriert sein.

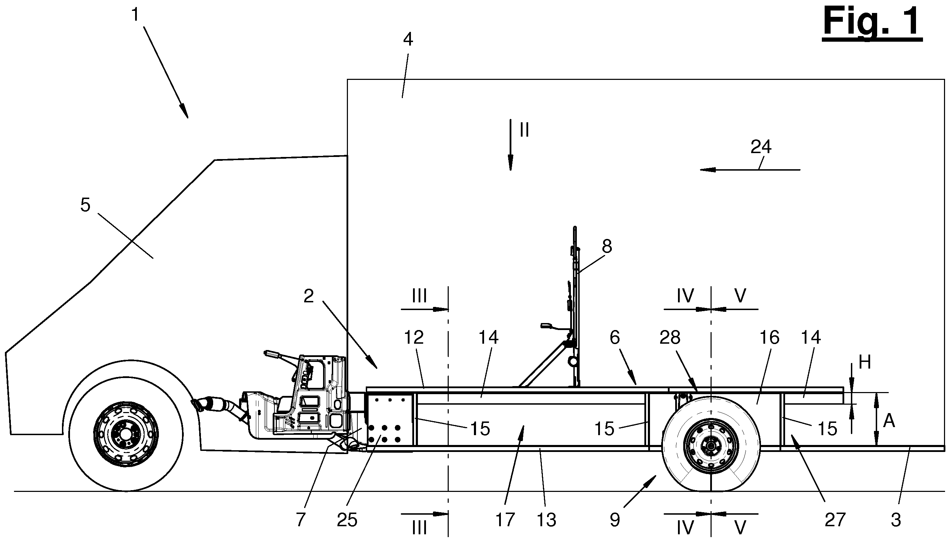

Der Aufbau (4) ist vorzugsweise als Kastenaufbau, insbesondere als Wohnaufbau ausgebildet. Das Fahrzeug (1) ist dabei als Freizeitmobil, insbesondere Wohnmobil gestaltet. Im Aufbau (4) befinden sich die bei einem Wohnmobil üblichen Sanitär-, Küchen-, Wohn- und Schlafeinrichtungen etc.. Das Fahrzeug (1) bzw. der Aufbau (4) kann die in Figur 1 angedeutete Heckverlängerung mit dem Heckrahmen (3) aufweisen. Alternativ sind beliebige andere Aufbauten und Einsatzzwecke, z.B. als Nutzfahrzeug, möglich.

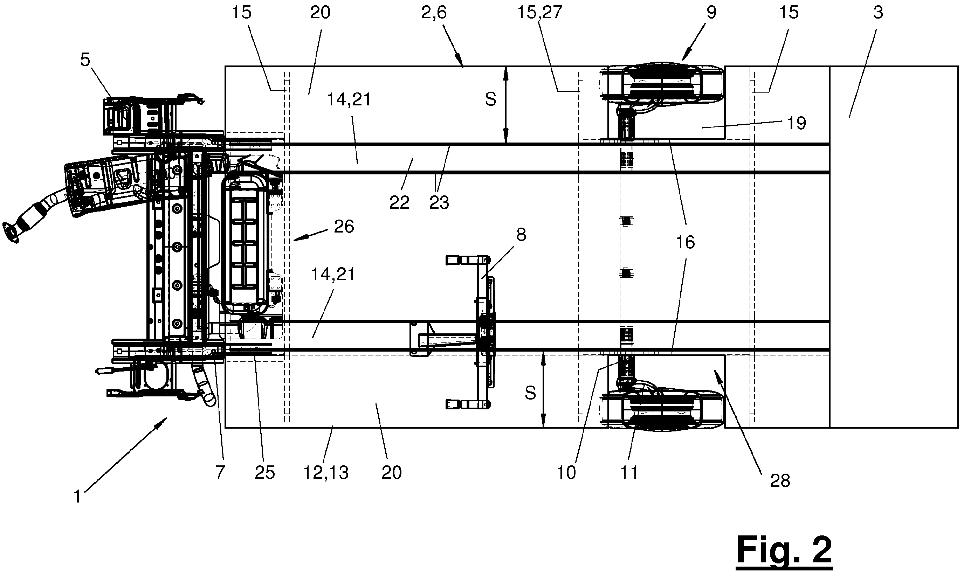

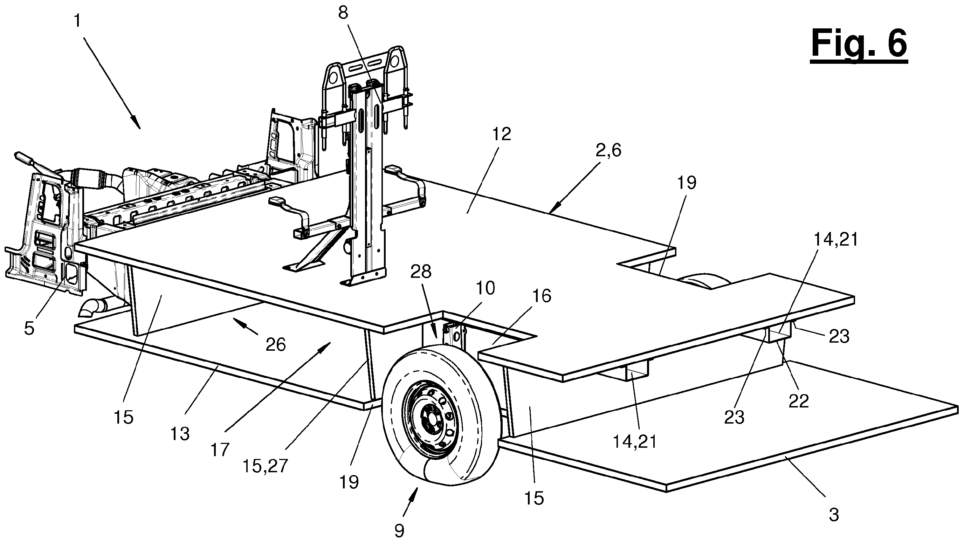

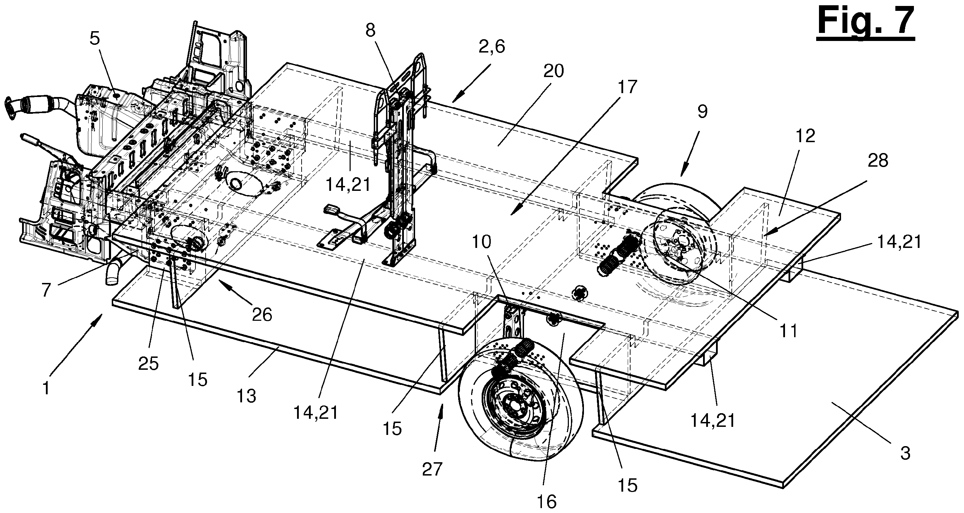

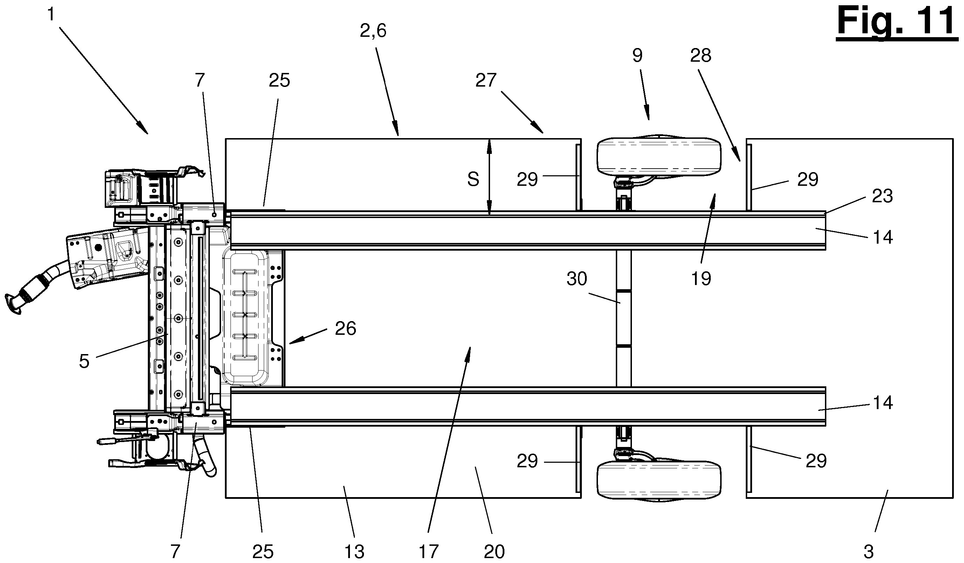

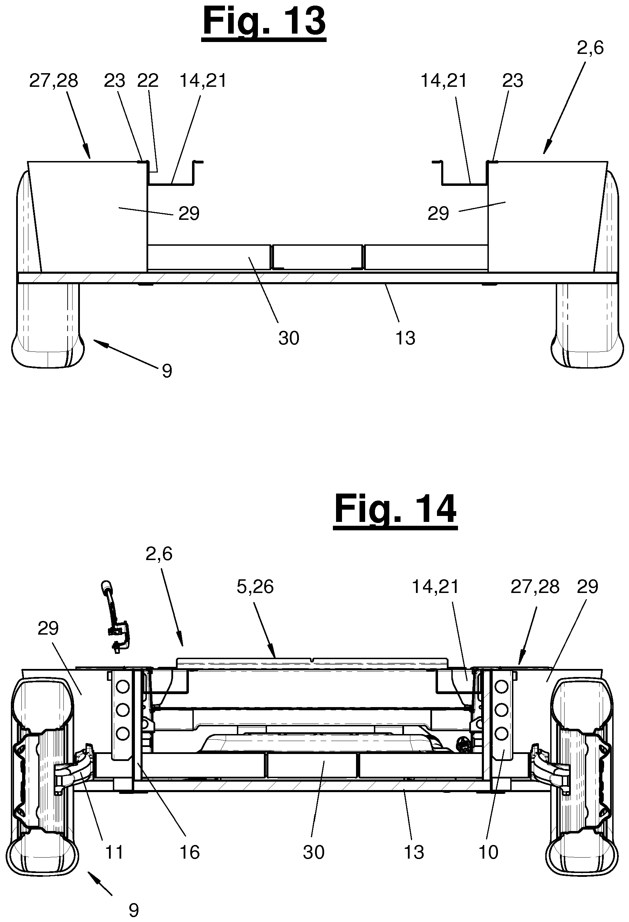

Der Plattformverbund (6) kann unterschiedlich ausgebildet sein. Figur 1 bis 8 und Figur 9 bis 14 zeigen zwei Varianten.

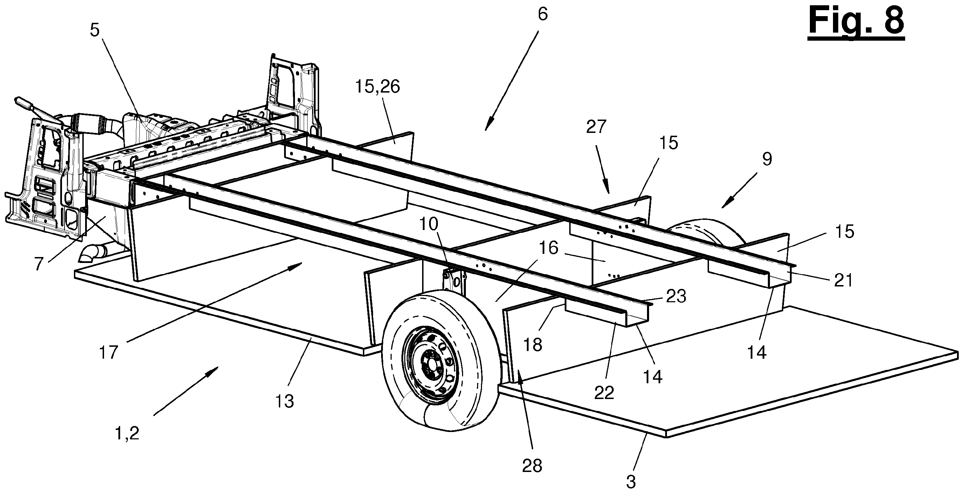

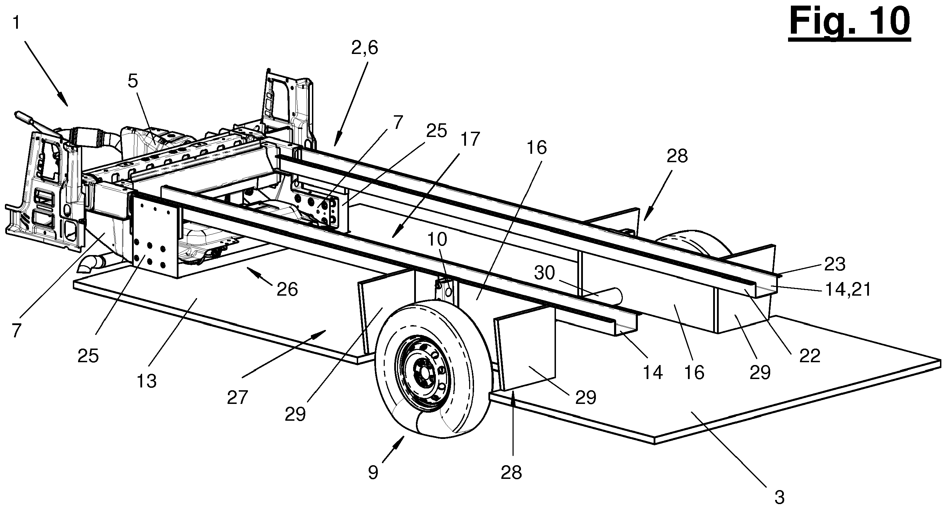

Der Plattformverbund (6) weist in beiden Varianten jeweils eine untere Plattform (13) sowie eine Stützeinrichtung (27) und mindestens einen Längsträger (14) auf. Diese in Figur 8 und Figur 10 dargestellte Ausführung stellt ein Basismodul dar. Zusätzlich kann eine obere Plattform (12) zur Bildung eines Endmoduls gemäß Figur 1 bis 7 und Figur 9 vorhanden sein. Sie kann alternativ entfallen. Die obere Plattform (12) kann bei der Erst-Herstellung des Plattformverbunds (6) bzw. Endmoduls bereits eingebaut werden. Sie kann alternativ nachträglich an einem Basismodul montiert werden. Die obere Plattform (12) kann den Boden des Aufbaus (4) bilden. Sie kann z.B. erst mit dem Aufbau (4) auf ein Basismodul gemäß Figur 8 aufgesetzt und montiert werden.

Die bevorzugt ebenen und horizontal ausgerichteten sowie parallelen Plattformen (12,13) sind übereinander angeordnet und dabei über einen Abstand (A) voneinander distanziert. Die Plattformen (12,13) können an den Ober-und Unterseiten der Stützeinrichtung (27) anliegen und hier befestigt und abgestützt sein. Die Stützeinrichtung (27) weist eine Stützhöhe (Q) auf. Diese kann den Abstand (A) bestimmen.

Der einzeln oder mehrfach vorhandene Längsträger (14) ist an der Stützeinrichtung (27) an ihrer Oberseite aufgenommen und schwebend mit Abstand oberhalb der unteren Plattform (13) angeordnet. Er kann an der Stützeinrichtung (27) abgestützt sowie ggf. befestigt sein. Der oder die Längsträger (14) ist oder sind in einem seitlichen Abstand (S) zu den Längsrändern des Plattformverbunds (6) bzw. der Plattform(en) (12,13) angeordnet.

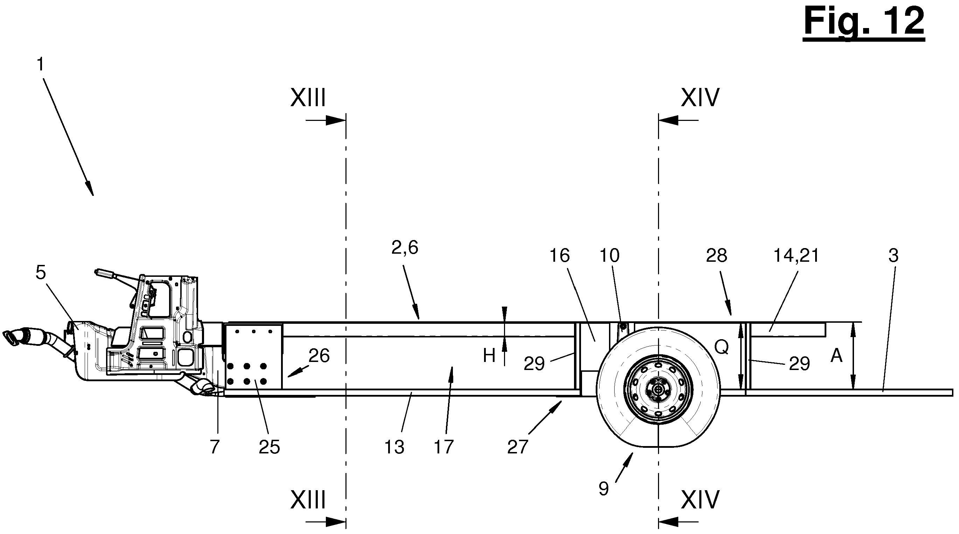

Der Längsträger (14) weist gemäß Figur 1 und Figur 12 eine Trägerhöhe (L) auf, die kleiner als der besagte Abstand (A) und die Stützhöhe (Q) ist. Der Längsträger (14) reicht dadurch nicht bis zur unteren Plattform (13) und tritt mit dieser auch nicht in Kontakt.

Der Längsträger (14) ist entlang der Längsrichtung (24) des Fahrzeugchassis (2) bzw. des Fahrzeugs (1) ausgerichtet. Dies ist auch die Längsrichtung des Plattformverbunds (6). Der Längsträger (14) erstreckt sich über den größten Teil, vorzugsweise über die gesamte Länge, des Plattformverbunds (6). Der Längsträger (14) versteift beim Endmodul die aufliegende obere Plattform (12) in Längsrichtung (24).

Der Längsträger (14) kann eine gerade Form und Erstreckung haben und exakt in Längsrichtung (24) ausgerichtet sein. Alternativ kann der Längsträger (14) eine geschwungene oder gebogene Form haben.

In der einfachsten Ausführungsform kann der Plattformverbund (6) einen einzelnen Längsträger (14) aufweisen, der an geeigneter Stelle, z.B. zentral, angeordnet ist. In den gezeigten Ausführungsformen hat der Plattformverbund (6) zwei Längsträger (14), die parallel und mit gegenseitigem seitlichen Abstand an der zugeordneten Plattform (12) angeordnet sind. Die Längsträger (14) erstrecken sich z.B. entlang des Längsrandes der zugeordneten Plattform (12) bzw. des Plattformverbunds (6). Sie sind dabei mit dem seitlichem Abstand S ein Stück zurück versetzt vom besagten Längsrand angeordnet. An einer oder beiden Plattformen (12,13) ergibt sich dadurch ein seitlicher Überstand (20).

In den gezeigten Ausführungsbeispielen sind die Längsträger (14) in ihrer Formgebung und Länge gleich ausgebildet. In einer anderen und nicht gezeigten Ausführungsform können mehr als zwei Längsträger vorhanden sein. Ferner können die Längsträger (14) bei einer Mehrfachanordnung untereinander in Form und Länge unterschiedlich ausgebildet sein. Sie müssen auch nicht parallel verlaufen bzw. ausgerichtet sein. Die nachfolgenden Erläuterungen zu dem gezeigten Paar von Längsträgern (14) geltend entsprechend auch für eine Einzelanordnung eines Längsträgers (14) oder für eine Variante mit drei oder mehr Längsträgern (14).

Die Längsträger (14) sind an der Stützeinrichtung (27) und an deren Oberseite aufgenommen. Sie werden dadurch von der unteren Plattform (13) distanziert. Die Längsträger (14) sind an der Stützeinrichtung (27) versenkt oder hängend aufgenommen. Dabei können die Oberseiten der Längsträger (14) und der Stützeinrichtung (27) im wesentlichen auf gleicher Höhe liegen.

Die Stützeinrichtung (27) weist in der ersten Variante von Figur 1 bis 8 mehrere Querträger (15) auf. Der oder die Längsträger (14) sind an der Oberseite der Querträger (15) aufgenommen. Die Stützeinrichtung (27) kann weitere Komponenten, z.B. eine frontseitigen Beschlag (25) und/oder eine Achsabstützung (28) aufweisen.

Für die Aufnahme und Abstützung des oder der Längsträger (14) weisen die Querträger (15) jeweils eine randseitige Ausnehmung (18) an der Oberseite auf. Diese kann an die äußere Formgebung des betreffenden Längsträgers (14) angepasst sein und diesen formschlüssig aufnehmen und umschließen. Die Längsträger (14) können an den Querträgern (15) auch abgestützt und in geeigneter Weise befestigt sein, z.B. durch Verkleben, Flanschverschraubungen oder dgl..

Die Querträger (15) sind quer oder schräg zur Längsrichtung (24) ausgerichtet. Sie reichen vorzugsweise über die gesamte Breite oder zumindest über den größten Teil der Breite der Plattform(en) (12,13). Der Plattformverbund (6) weist mindestens zwei, vorzugsweise drei oder mehr Querträger (15) auf. Diese sind in Längsrichtung (14) mit gegenseitigem Abstand angeordnet. Die Querträger (15) und die Längsträger (14) bilden miteinander ein Stützgitter für die Versteifung des Plattformverbunds (6), insbesondere der unteren Plattform (13). Die Längsränder der Plattformen (12,13) liegen bevorzugt in der vertikalen Projektion übereinander.

Die aufrechten Querträger (15) sind zwischen den distanzierten Plattformen (12,13) angeordnet. Die obere Plattform (12) ist auf dem Längsträger (14) und den Querträgern (15) angeordnet. Der Längsträger (14) und die obere Plattform (12) sind aneinander befestigt, insbesondere verklebt. Der Längsträger (14) versteift die obere Plattform (12). Die untere Plattform (13) kann eine größere Steifigkeit als die obere Plattform (12) aufweisen. Sie kann hierfür massiver und/oder aus einem anderen Material ausgebildet sein. Alternativ oder zusätzlich kann die untere Plattform (13) mit einem bevorzugt über ihre Länge durchgehenden Stützträger versteift sein. Der Stützträger kann an der Unterseite der Plattform (13) angeordnet sein.

Mehrere, vorzugsweise alle, Querträger (15) können mit ihrem oberen bzw. unteren Rand die jeweilige obere und untere Plattform (12,13) kontaktieren. Sie distanzieren und stützen dabei die anliegenden Plattformen (12,13) in der Höhe bzw. in der Vertikalen. Die Plattformen (12,13) und die Querträger (15) sind in geeigneter Weise aneinander befestigt, z.B. durch Verkleben, Verschrauben oder dgl..

Die Querträger (15) sind in den gezeigten Ausführungsbeispielen untereinander gleichartig ausgebildet. Alternativ kann es Abweichungen geben.

Die Querträger (15) können eine beliebig geeignete Formgebung haben. Vorzugsweise weisen ein oder mehrere Querträger (15) eine z.B. ebene Plattenform auf. Sie können als massive oder gelochte Platten aus einem geeigneten Material, insbesondere Kunststoff und/oder Metall, ausgebildet sein. Alternativ ist eine rahmenartige Ausbildung möglich. Die Querträger (15) können eine oder mehrere Lagen oder Schichten aus gleichen oder unterschiedlichen Werkstoffen aufweisen. Es kann sich insbesondere um Verbundplatten handeln. Die Querträger (15) verbinden und stützen die Plattformen (12,13) und haben hierfür eine geeignete Formgebung und Festigkeit. Außerdem können sie wärmeisolierende Eigenschaften haben.

Zwischen den parallelen Plattformen (12,13) und der Stützeinrichtung (27), insbesondere den angrenzenden Querträgern (15), wird ein Zwischenraum (17) ausgebildet, der in unterschiedlicher Weise genutzt werden kann, z.B. als Stauraum oder als Aufnahmeraum für Einbauten, z.B. Heizung, Klimaanlage, Fluidtank oder dergleichen.

Der Zwischenraum (17) kann abgeschlossen oder von außen an einer oder mehreren Stellen von oben und/oder seitlich und/oder axial zugänglich sein. Die z.B. am Plattformrand bzw. Überstand gebildeten Zugangsöffnungen können durch Klappen oder dgl. verschlossen werden. Frontseitig weist der Plattformverbund (6) eine Frontanbindung (26) auf. Diese kann ggf. den Zwischenraum (17) axial nach vorn abschließen. Die Frontanbindung (26) kann z.B. von einem Querträger (15) gebildet werden.

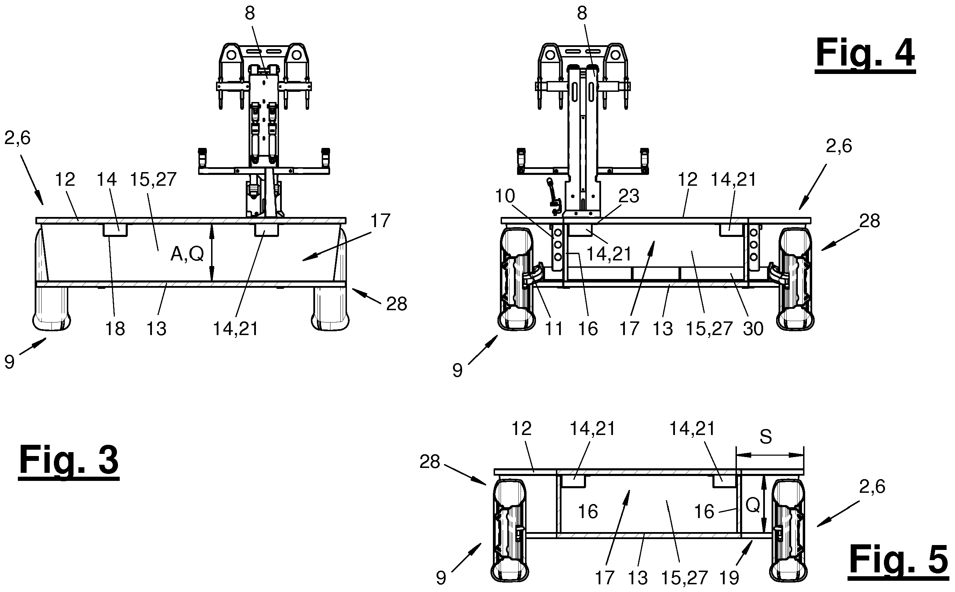

Die Querträger (15) haben z.B. gemäß Figur 3 eine Trapezform mit parallelen Ober- und Unterseiten und schrägen Seitenrändern, die nach oben hin schräg auswärts gerichtet sind. Sie sind vollwandig ausgebildet. Alternativ können eine oder mehrere Durchgangsöffnungen zu einem inneren Freiraum (17) vorhanden sein.

Die Längsträger (14) sind in den bevorzugten Ausführungsbeispielen als Hohlkammerprofile (21) ausgebildet. Sie haben eine entsprechend gebogene bzw. gewölbte Profilwandung (22), die eine innenliegende Hohlkammer umschließt. Das Hohlkammerprofil (21) kann an ein oder beiden Stirnseiten offen sein. Es kann außerdem mindestens eine axiale Öffnung aufweisen. Diese Öffnung ist vorzugsweise nach oben und zur oberen Plattform (12) gerichtet und wird von dieser überdeckt bzw. verschlossen. In die Hohlkammerprofile (21) können Leitungen oder Rohre für elektrischen Strom, Luft, Flüssigkeiten oder dgl. eingelegt sein. Sie werden von der Profilwandung (22) seitlich umschlossen. Die Profilwandung (22) kann über die gesamte Profillänge massiv oder stellenweise unterbrochen ausgebildet sein. Durch solche lokalen Unterbrechungen oder Öffnungen können Leitungen oder Rohre seitlich aus einem Hohlprofil (21) herausgeführt sein.

Ein Längsträger (14), insbesondere sein Hohlkammerprofil (21), kann z.B. an der Oberseite einen oder mehrere Flansche (23) mit geeigneter Ausrichtung aufweisen, die zur Anlage und ggf. Befestigung an der oberen Plattform (12) dienen können. Eine Befestigung kann in Axialrichtung unterbrechungsfrei oder stellenweise erfolgen. Sie kann auf beliebige Weise, z.B. durch Kleben, Schweißen, Schrauben, Nieten oder dgl. erfolgen.

Die Querschnittsform der Längsträger (14), insbesondere Hohlprofile (21), kann unterschiedlich ausgebildet sein. In den gezeigten Ausführungsbeispielen sind die Hohlprofile (21) als Hutprofile ausgebildet und haben im Querschnitt eine Omega-Form mit seitlich abstehenden und axial erstreckten Flanschen (23) an beiden Rändern. Die Profilwandung (22) kann dabei U-förmig ausgebildet sein und in entsprechenden rechteckigen Ausnehmungen (19) am oberen Rand der Querträger (15) formschlüssig aufgenommen sein. Für die Flansche (23) kann eine entsprechende Ansenkung für den bündigen Abschluss mit der Oberkante der Querträger (15) vorhanden sein. Alternativ können die Flansche (23) auf der Oberseite der Querträger (15) aufliegen und die zugeordnete Plattform (12) entsprechend vom Querträger (15) distanzieren. Die Verbindung kann dann über die Befestigung der Längsträger (14) einerseits an der besagten Plattform (12) und andererseits an den Querträgern (15). Im Distanzspalt kann andererseits ein geeigneter dicker Kleber oder Schaum eingebracht werden.

Abweichend von den gezeigten Ausführungsbeispielen kann die Querschnittsform der Längsträger (14) bzw. der Hohlprofile (21) eine andere sein. Sie kann z.B. als umfangseitig geschlossene Kastenform oder seitlich offene U- oder C-Form ausgeführt sein.

Die Längsträger (14) können als formsteife Profile ausgebildet sein und aus einem geeigneten und insbesondere festen Werkstoff bestehen. Dies kann z.B. ein Metall, insbesondere Stahl oder ein Leichtmetall, sein. Alternativ kann ein verstärkter, insbesondere faserverstärkter, Kunststoff zum Einsatz kommen, z.B. GFK.

Die Plattformen (12,13) können in beliebig geeigneter Weise ausgebildet sein. Sie können einteilig oder mehrteilig sein. Sie können eben und ggf. mehrlagig ausgebildet sein, insbesondere als Verbundplatten. Eine oder beide Plattformen (12,13) können im mittleren Bereich und/oder an einem Randbereich eine Ausnehmung (19) aufweisen. Eine oder beide Plattformen (12,13) können z.B. im Bereich der Achsanordnung (9) seitliche Ausnehmungen (19) zur Bildung von Radausschnitten aufweisen.

Die obere und/oder untere Plattform (12,13) ragt an einer oder beiden Längsseiten seitlich über den jeweiligen benachbarten Längsträger (14) hinaus. Hierdurch wird ein seitlicher Überstand (20) und ein Freiraumbereich gebildet, der in unterschiedlicher Weise genutzt werden kann. Hier können z.B. seitliche Stauboxen angeordnet oder ausgebildet sein. Der Überstand (20) kann dem Abstand (S) entsprechen.

Der Plattformverbund (6) nimmt in der erwähnten Weise eine hintere Achsanordnung (9) des Fahrzeuges (1) auf. Hierfür kann er eine Achsabstützung (28) aufweisen. In den Ausführungsbeispielen ist eine Einzelachse gezeigt. Alternativ kann eine mehrfache Achsanordnung vorhanden sein, z.B. eine Tandemachse oder Tripelachse.

Der Plattformverbund (6) bzw. die Achsabstützung (28) weist im Achsbereich parallele und axial ausgerichtete Achsträger (16) auf. Diese sind z.B. als aufrechte und bevorzugt massive Platten ausgebildet. Die Achsträger (16) erstrecken sich über den besagten Abstand (A) bzw. die Stützhöhe (Q) und sind an der Unterseite mit der unteren Plattform (13) und ggf. an der Oberseite mit der oberen Plattform (12) fest verbunden. Die Achsabstützung (28) kann ferner mehrere, insbesondere zwei, parallele Querträger (15) aufweisen. Die Achsträger (16) sind stirnseitig mit jeweils einem Querträger (15) fest verbunden. Die gegenseitige Verbindung und Befestigung der Teile (12,13,15,16) kann in beliebig geeigneter Weise, z.B. durch Verkleben, Verschrauben mit Halteprofilen oder dgl. erfolgen. Figur 4 und 5 zeigen diese Ausbildung.

Die Achsträger (16) sind jeweils seitlich angrenzend neben einem Längsträger (14) angeordnet. Sie befinden sich z.B. jeweils an der Außenseite eines Längsträgers (14). Der Achsträger (16) und der benachbarte Längsträger (14) können miteinander verbunden und ggf. aneinander befestigt sein, z.B. über den Flansch (23) und/oder die Seitenwand (22). Der Längsträger (14) kann außerdem den Achsträger (16) seitlich führen und gegen Querkräfte sowie Momente abstützen. Die Achsabstützung (28), insbesondere ihre Achsträger (16), können ein Bestandteil der Stützeinrichtung (27) sein.

Die Achsträger (16) befinden sich am jeweiligen inneren Rand der Radausschnitte (19). Die angrenzenden Querträger (15) ragen seitlich über die Achsträger (16) hinaus. Dadurch entsteht eine stabile Achsabstützung (28), z.B. in Form eines H-förmigen Trägerrahmens. Dieser kann sich quer über die Plattform(en) (12,13) erstrecken. Die Plattformen (12,13) und die damit im Achsbereich verbundene Achsabstützung (28) bilden beim Basis- und Endmodul eine besonders steife Tragzelle innerhalb des Plattformverbundes (6). Die Querträger (15) und Achsträger (16) bilden außerdem ein Radhaus.

Die Achsträger (16) können zur Befestigung und Abstützung der Achsanordnung (9) dienen. Die Achsanordnung (9) kann in beliebiger Weise ausgebildet sein. In den gezeigten Ausführungsbeispielen weist sie einen quer über die Chassisbreite durchgehenden Achskörper (30), insbesondere ein Achsrohr, auf, an dessen Stirnenden jeweils ein Achsbock (10) und ein Radlenker (11), z.B. ein Längslenker, angeordnet sind. Der Achskörper (30) kann auf oder unter der unteren Plattform (13) angeordnet sein. Ferner kann eine geeignete Federung, z.B. eine Gummi- oder Drehstabfederung im oder am Achsrohr, eine Luftfederung oder dgl. nebst geeigneter Stoßdämpfer vorhanden sein.

Der Radlenker (11) kann alternativ als Schräglenker ausgebildet sein. In weiterer Abwandlung kann auf ein Achsrohr verzichtet werden, wobei der Radlenker (11) am Achsbock (10) drehbar gelagert ist und die Achsböcke (10) ggf. untereinander durch ein flaches und liegend angeordnetes Stützprofil verbunden sind. Dieses kann sich über oder unter der unteren Plattform (13) quer über die Chassisbreite erstrecken, wobei seine Enden an den Achsböcken (10) befestigt sind. Als weitere Alternative sind u.a. Halbachsen oder eigenständige Einzelradaufhängungen möglich.

Die Achsböcke (10) sind zur Anordnung und Befestigung an jeweils einem Achsträger (16) ausgebildet. Sie weisen hierfür z.B. einen Anbauflansch zur planen Anlage und Befestigung, insbesondere Verschraubung, an der Außenseite des Achsträgers (16) auf. Der Achsbock (10) kann außerdem eine aufrechte säulenartige Verstärkung aufweisen. Diese kann auf dem Achskörper (30) sitzen und befestigt, z.B. verschweißt, sein.

Wie Figur 1 bis 7 und Figur 9 verdeutlichen, kann der Plattformverbund (6) einen Gurtbock (8) aufnehmen und abstützen. Der Gurtbock (8) ist z.B. freistehend auf der oberen Plattform (12) angeordnet und abgestützt. Die Anordnung ist bevorzugt in der Projektion oberhalb eines Längsträgers (14), wobei der Gurtbock (8) durch die obere Plattform (12) hindurch am Längsträger (14) abgestützt und mit geeigneten Befestigungsmitteln, z.B. Schrauben, befestigt ist. Der Gurtbock (8) kann auch mit einer Sitzgelegenheit (nicht dargestellt) kombiniert sein. Der Gurtbock (8) weist einen aufrechten Ständer mit einem vom Boden distanzierten Querarm und einer frontseitigen sowie schräg abwärts sowie in Längsrichtung ausgestellten Strebe auf. An der Strebe und am Ständer können Fußplatten zur Abstützung und Befestigung vorhanden sein. Am Gurtbock (8) sind ein oder mehrere Sicherheitsgurte und eine jeweils zugehörige Gurtmechanik angeordnet. Am oberen Ende des säulenartigen Ständers kann eine Stütz- und Verstellmechanik für Kopfstützen angeordnet sein.

Der Plattformverbund (6) ist frontseitig mit dem Zugkopf (5) verbindbar bzw. verbunden. Hierfür kann der Plattformverbund (6) einen oder mehrere Adapter (7) für eine feste Verbindung mit dem Zugkopf (5), insbesondere mit dessen Chassis bzw. Längsträgern, aufweisen. Der Adapter (7) kann einen Höhenversatz und/oder einen Seitenversatz des Plattformverbunds (6) gegenüber dem Zugkopf (5) bewirken. Bevorzugt wird eine schweißfreie Verbindung, insbesondere ein Schraubadapter.

Der Plattformverbund (6) kann einen Beschlag (25) zur festen Verbindung mit dem Adapter (7) aufweisen. Der Beschlag (25) kann insbesondere einen Längsträger (14) mit dem jeweiligen Adapter (7) verbinden und die Verbindungsstelle versteifen.

Der Beschlag (25) kann außerdem den Längsträger (14) abstützen und Bestandteil der Stützeinrichtung (27) sein. Der Beschlag (25) kann mehrfach, z.B. doppelt, vorhanden sein. Er kann seitlich am Längsträger (14) bzw. der Seitenwand (22) anliegen und dessen Flansch (23) untergreifen. Der Beschlag (25) und der zugeordnete Längsträger (14) können aneinander in geeigneter Weise befestigt, z.B. verklebt oder verschraubt, sein.

Der Plattformverbund (6) kann an der Heckseite mit einem Heckrahmen (3) verbunden sein. Dieser kann z.B. als axialer Ansatz oder Fortsatz der unteren Plattform (13) ausgebildet sein. Er kann nach hinten über den rückwärtigen Rand der oberen Plattform (12) hinausragen.

Die vorgenannten gegenseitigen Verbindungen und Befestigungen der Komponenten (12,13,14,15,16) des Plattformverbunds (6) können durch einen formschlüssigen Eingriff der Komponenten (12,13,14,15,16) ergänzt werden.

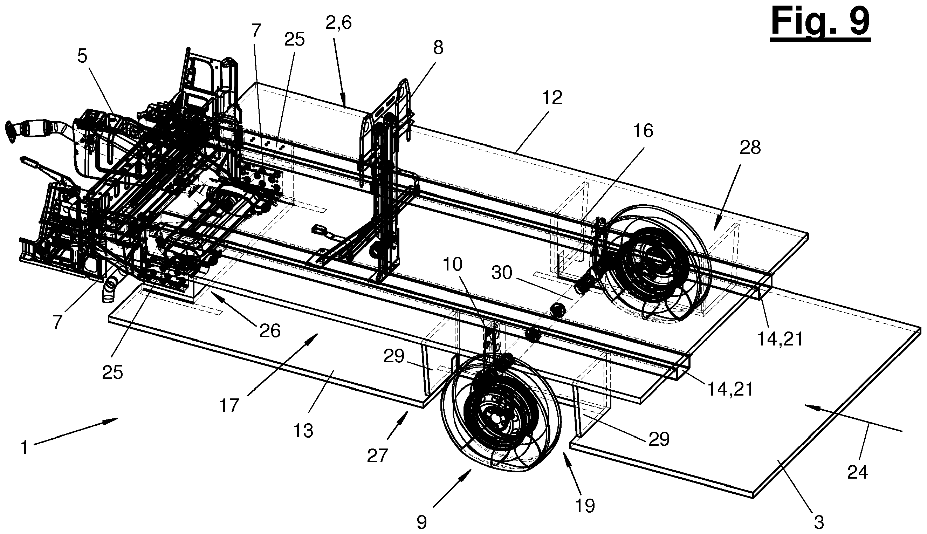

Die zweite Variante des Plattformverbunds (6) und des Chassis (2) gemäß Figur 9 bis 14 stimmt weitgehend mit der ersten Variante überein. Gleiche Bezugsziffern bezeichnen gleiche oder gleichartige Teile.

Im Unterschied zur ersten Variante sind bei der zweiten Ausführungsform von Figur 9 bis 14 die über die Plattformbreite durchgehenden Querträger (15) entfallen. Die Stützeinrichtung (27) für die ein oder mehreren Längsträger (14) wird von der Achsabstützung (28) und ggf. von ein oder mehreren frontseitigen Beschlägen (25) gebildet. Die Frontanbindung (26) kann ebenfalls Bestandteil der Stützeinrichtung (27) sein.

Die Achsabstützung (28) wird bei der zweiten Variante von einzelnen Radkästen, insbesondere zwei Radkästen, gebildet. Die beiden Radkästen werden jeweils von einem axialen Achsträger (16) der vorbeschriebenen Art und von vorderen und hinteren verkürzten Querwänden (29) gebildet, die am Rand des Radausschnitts (19) angeordnet sind. Die Achsträger (16) und die Querwände (29) haben jeweils eine Stützhöhe (Q) und sind mit der unteren Plattform (13) bzw. beim Endmodul auch mit der oberen Plattform (12) fest verbunden. Die verkürzten Querwände (29) und die Achsträger (16) sind miteinander fest verbunden. Sie können in der vorbeschriebenen Weise plattenartig ausgebildet sein.

Die verkürzten Querwände (29) reichen vom Randbereich des Plattformverbundes (6) jeweils bis zu ihrem zugehörigen Achsträger (16) und enden hier. Hierdurch besteht zwischen den seitlich distanzierten Radhäusern ein Freiraum, der den vorgenannten Zwischenraum (17) nach hinten vergrößert. Vom Heck des Plattformverbunds (6) bzw. eines Heckrahmens (3) kann dieser Freiraum zwischen den Radkästen axial zugänglich sein.

Wie Figur 12 bis 14 verdeutlichen, werden der oder die Längsträger (14) am hinteren Bereich durch die Achsabstützung (28), insbesondere durch die axialen Achsträger (16) und/oder die Querwände (29), abgestützt. Die Verbindung erfolgt hierbei z.B. nur an der Außenseite der beiden Längsträger (14), wobei deren äußerer Flansch (23) auf dem Radkasten aufliegt und dessen äußere Seitenwand seitlich am Radkasten anliegt. Der zur Innenseite des Plattformverbunds (6) bzw. Chassis (2) weisende Innenrand der Längsträger (14) ist bei der zweiten Variante im hinteren Bereich nicht von unten her unterstützt. Er wird durch die Befestigung an der oberen Plattform (12) stabilisiert.

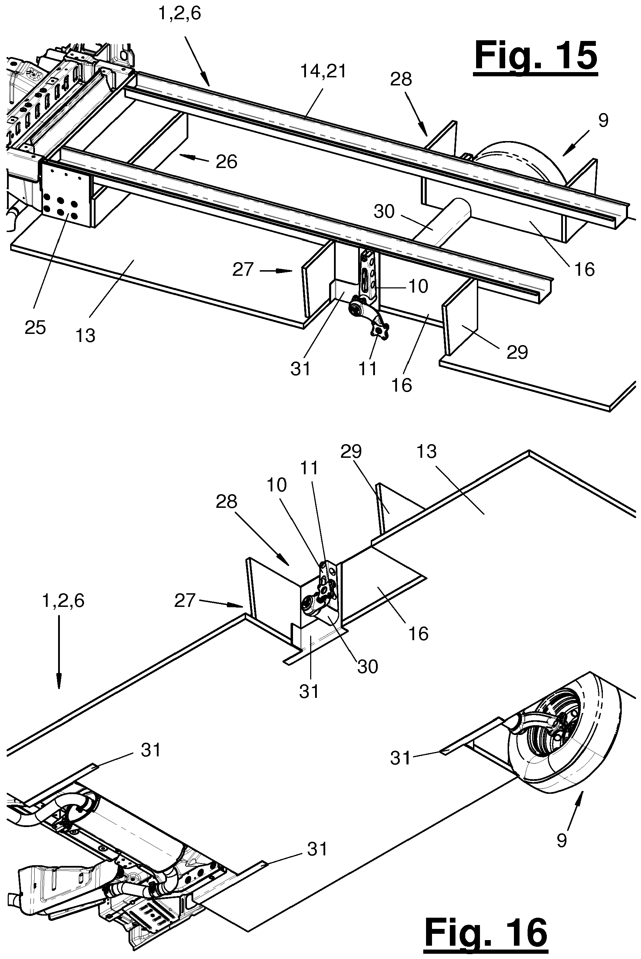

Frontseitig können der oder die Längsträger (14) an dem oder den Beschlägen (25) und ggf. an der Frontanbindung (26) abgestützt werden. Die Frontanbindung (26) weist z.B. an der Vorderseite einer oder beider Plattformen (12,13) einen zentralen Ausschnitt auf, der eine hintere Komponente des Zugkopfes (5), z.B. einen Tank oder einen Auspuff, umschließt. Der Ausschnitt kann seitlich von den vorbeschriebenen Beschlägen (25) und rückseitig von einer Querwand umgeben und begrenzt werden. Die Querwand hat eine verkürzte Länge und erstreckt sich zwischen den Beschlägen (25). Figur 15 zeigt diese Anordnung.

Die Beschläge (25) sind in der vorgenannten Weise einerseits mit jeweils einem Adapter (7) und andererseits mit jeweils einem Längsträger (14) verbunden. Sie sind außerdem an der Unterseite mit der unteren Plattform (13) fest verbunden. Die Beschläge (25) stützen frontseitig den oder die Längsträger (14) ab und sorgen gegebenenfalls auch für eine Abstützung der oberen Plattform (12). Die obere Plattform (12) kann am vorderen Rand außerdem auf den Adaptern (7) aufliegen und abgestützt sein. Die z.B. plattenförmigen Beschläge (25) können bereichsweise verstärkt sein.

Ein oder mehrere Teile des Plattformverbunds (6) können an einer Verbindungsstelle eine Versteifung (31) aufweisen. Diese stabilisiert und versteift die Verbindung. Sie kann auch zur zusätzlichen Befestigung des besagten teils dienen. Ein solches Teil des Plattformverbunds (6) kann z.B. ein Achsbock (10) und/oder ein Beschlag (25) oder auch ein anderes Teil sein. Vorzugsweise handelt es sich um ein kraftaufnehmendes Teil. Die Verbindungsstelle besteht z.B. zur unteren Plattform (13).

Wie Figur 15 und 16 in perspektivischen Ansichten von oben und unten verdeutlichen, kann eine Versteifung (31) als Stützmanschette, z.B. als Winkelbeschlag, ausgebildet sein. Die Versteifung (31) kann an das betreffende Teil des Plattformverbundes (6) angeformt sein. Bei einem Achsbock (10) ist z.B. der Anbauflansch vergrößert. Er weist z.B. verlängerte aufrechte und abgebogene seitliche Flanschbereiche zur planen Anlage am Achsträger (16) und an einer Querwand (29) sowie einen unteren abgekanteten Flanschbereich mit Untergriff des Randbereichs der unteren Plattform (13) auf.

Die Versteifung (31) am Beschlag (25) kann innenseitig und im Bereich des vorderen Plattformausschnitts angeordnet sein, wobei sie einen aufrechten Flanschbereich zur Anlage am Beschlag (25) und einen unteren, abgekanteten Flanschbereich zum Untergriff des Randes der unteren Plattform (13) aufweist.

Abwandlungen der gezeigten und beschriebenen Ausführungsformen sind in verschiedener Weise möglich. Insbesondere können die Merkmale der Ausführungsbeispiele und der genannten Varianten beliebig miteinander kombiniert, insbesondere auch vertauscht werden.

Die Ausbildung der Achsabstützung (28) kann variieren. Insbesondere können die Radhäuser von einteiligen Rahmen oder Gestellen in vollwandiger oder unterbrochener Ausführung gebildet sein. Die Stützeinrichtung (27) kann bedarfsweise weitere Komponenten, z.B. aufrechte Stützstreben oder dgl., aufweisen. Die Achsanordnung (9) kann ein oder mehrere angetriebene Hinterachsen aufweisen. Im Falle eines frontgetriebenen Zugkopfes (5) kann der Antriebsstrang durch den Zwischenraum (17) oder unter der unteren Plattform (13) verlegt sein, ggf. in einer Einhausung.

In den gezeigten Ausführungsbeispielen sind die ein oder mehreren Längsträger (14) nur an der oberen Plattform (12) angeordnet und ggf. befestigt. In Abwandlung hierzu können Längsträger (14) an beiden Plattformen (12,13) angeordnet sein. Ferner ist es möglich, einen oder mehrere Längsträger (14) alternativ oder zusätzlich zu den gezeigten Ausführungsformen an der Oberseite der oberen Plattform (12) anzuordnen und ggf. zu befestigen.

### BEZUGSZEICHENLISTE

- 1: Fahrzeug, Straßenfahrzeug
- 2: Fahrzeugchassis
- 3: Heckrahmen
- 4: Aufbau
- 5: Zugkopf
- 6: Plattformverbund
- 7: Adapter
- 8: Gurtbock
- 9: Achsanordnung
- 10: Achsbock
- 11: Radlenker, Längslenker
- 12: Plattform oben
- 13: Plattform unten
- 14: Längsträger
- 15: Querträger
- 16: Achsträger
- 17: Zwischenraum, Freiraum
- 18: Ausnehmung
- 19: Ausnehmung, Radausschnitt
- 20: Überstand seitlich
- 21: Hohlkammerprofil, Hutprofil
- 22: Profilwandung
- 23: Flansch
- 24: Längsrichtung
- 25: Beschlag
- 26: Frontanbindung
- 27: Stützeinrichtung
- 28: Achsabstützung, Radkasten
- 29: Querwand
- 30: Achskörper, Achsrohr
- 31: Versteifung
- A: Abstand der Plattformen
- L: Trägerhöhe Längsträger
- Q: Stützhöhe Stützeinrichtung
- S: seitlicher Abstand

## Patentansprüche

1. Plattformverbund für ein Fahrzeugchassis (2), wobei der Plattformverbund (6) mindestens einen Längsträger (14) und eine untere Plattform (13) aufweist, wobei der Längsträger (14) an einer mit der unteren Plattform (13) verbundenen Stützeinrichtung (27) schwebend und mit Abstand oberhalb der unteren Plattform (13) angeordnet ist, **dadurch gekennzeichnet, dass** der Plattformverbund (6) frontseitig mit einem motorisierten, bevorzugt frontgetriebenen, Zugkopf (5) verbindbar bzw. verbunden ist.

2. Plattformverbund nach Anspruch 1, **dadurch gekennzeichnet, dass** der Längsträger (14) an der Stützeinrichtung (27) abgestützt sowie ggf. befestigt ist.

3. Plattformverbund nach Anspruch 1 oder 2, **dadurch gekennzeichnet, dass** der Plattformverbund (6) eine hintere Achsanordnung (9) des Fahrzeugs (1) aufnimmt.

4. Plattformverbund nach Anspruch 1, 2 oder 3, **dadurch gekennzeichnet, dass** die Stützeinrichtung (27) von ein oder mehreren Querträgern (15) und/oder von einer Achsabstützung (28) einer Achsanordnung (9) gebildet ist.

5. Plattformverbund nach Anspruch 4, **dadurch gekennzeichnet, dass** die ein oder mehreren Querträger (15) an oder auf der unteren Plattform (13) angeordnet und abgestützt sind.

6. Plattformverbund nach einem der vorhergehenden Ansprüche, **dadurch gekennzeichnet, dass** der Längsträger (14) des Plattformverbunds (6) in einem seitlichen Abstand (S) zu den Stirnseiten der Stützeinrichtung (27) bzw. zum Seitenrand des Plattformverbunds (6) angeordnet ist.

7. Plattformverbund nach einem der vorhergehenden Ansprüche, **dadurch gekennzeichnet, dass** der Längsträger (14) an der Stützeinrichtung (27) versenkt aufgenommen ist, wobei die Oberseiten der Längsträger (14) und der Stützeinrichtung (27) im wesentlichen auf gleicher Höhe liegen.

8. Plattformverbund nach einem der vorhergehenden Ansprüche, **dadurch gekennzeichnet, dass** der Plattformverbund (6) eine obere Plattform (12) aufweist, die auf dem Längsträger (14) und/oder der Stützeinrichtung (27) angeordnet ist.

9. Plattformverbund nach einem der vorhergehenden Ansprüche, **dadurch gekennzeichnet, dass** der Längsträger (14) als Hohlkammerprofil (21), insbesondere als Hutprofil, ausgebildet ist.

10. Plattformverbund nach einem der vorhergehenden Ansprüche, **dadurch gekennzeichnet, dass** der Plattformverbund (6) einen Adapter (7) zur festen Verbindung mit dem motorisierten, bevorzugt frontgetriebenen, Zugkopf (5), insbesondere mit dessen Zugkopfchassis, aufweist.

11. Plattformverbund nach einem der vorhergehenden Ansprüche, **dadurch gekennzeichnet, dass** die untere Plattform (13) des Plattformverbunds (6) mit einem bevorzugt über ihre Länge durchgehenden Stützträger versteift ist.

12. Plattformverbund nach einem der Ansprüche 8 bis 11, **dadurch gekennzeichnet, dass** die untere Plattform (13) des Plattformverbunds (6) eine größere Steifigkeit als die obere Plattform (12) aufweist.

13. Plattformverbund nach einem der vorhergehenden Ansprüche, **dadurch gekennzeichnet, dass** der Plattformverbund (6) heckseitig mit einem Heckrahmen (3) verbunden ist.

14. Fahrzeugchassis für ein Fahrzeug (1), insbesondere ein Straßenfahrzeug, wobei das Fahrzeugchassis (2) einen Plattformverbund (6) aufweist, **dadurch gekennzeichnet, dass** der Plattformverbund (6) nach einem der Ansprüche 1 bis 13 ausgebildet ist.

15. Fahrzeug, insbesondere Straßenfahrzeug, mit einem Fahrzeugchassis (2), welches einen Plattformverbund (6) aufweist, **dadurch gekennzeichnet, dass** der Plattformverbund (6) nach einem der Ansprüche 1 bis 13 ausgebildet ist, wobei das Fahrzeug (1) einen mit dem Fahrzeugchassis (2) verbundenen, motorisierten, bevorzugt frontgetriebenen, Zugkopf (5) aufweist.

## Claims

1. Platform system for a vehicle chassis (2), wherein the platform system (6) has at least one longitudinal member (14) and a lower platform (13), wherein the longitudinal member (14) is arranged in a floating manner on a support device (27) connected to the lower platform (13), and is arranged at a distance above the lower platform (13), **characterized in that** the platform system (6) is connectable or is connected on the front side to a motorized, preferably front-driven, tractor head (5).

2. Platform system according to Claim 1, **characterized in that** the longitudinal member (14) is supported on, and optionally fastened to, the support device (27).

3. Platform system according to Claim 1 or 2, **characterized in that** the platform system (6) accommodates a rear axle arrangement (9) of the vehicle (1).

4. Platform system according to Claim 1, 2 or 3, **characterized in that** the support device (27) is formed by one or more crossmembers (15) and/or by an axle support (28) of an axle arrangement (9).

5. Platform system according to Claim 4, **characterized in that** the one or more crossmembers (15) are arranged and supported at or on the lower platform (13).

6. Platform system according to one of the preceding claims, **characterized in that** the longitudinal member (14) of the platform system (6) is arranged at a lateral distance (S) from the end sides of the support device (27) or from the side edge of the platform system (6).

7. Platform system according to one of the preceding claims, **characterized in that** the longitudinal member (14) is accommodated in a recessed manner on the support device (27), wherein the upper sides of the longitudinal members (14) and of the support device (27) lie substantially at the same height.

8. Platform system according to one of the preceding claims, **characterized in that** the platform system (6) has an upper platform (12) which is arranged on the longitudinal member (14) and/or on the support device (27).

9. Platform system according to one of the preceding claims, **characterized in that** the longitudinal member (14) is in the form of a hollow chamber profile (21), in particular a top-hat profile.

10. Platform system according to one of the preceding claims, **characterized in that** the platform system (6) has an adapter (7) for fixed connection to the motorized, preferably front-driven, tractor head (5), in particular to the tractor head chassis thereof.

11. Platform system according to one of the preceding claims, **characterized in that** the lower platform (13) of the platform system (6) is stiffened with a supporting member which is preferably continuous over the length of said platform.

12. Platform system according to one of Claims 8 to 11, **characterized in that** the lower platform (13) of the platform system (6) has greater rigidity than the upper platform (12).

13. Platform system according to one of the preceding claims, **characterized in that** the platform system (6) is connected on the rear side to a rear frame (3).

14. Vehicle chassis for a vehicle (1), in particular a road vehicle, wherein the vehicle chassis (2) has a platform system (6), **characterized in that** the platform system (6) is designed according to one of Claims 1 to 13.

15. Vehicle, in particular road vehicle, with a vehicle chassis (2) which has a platform system (6), **characterized in that** the platform system (6) is designed according to one of Claims 1 to 13, wherein the vehicle (1) has a motorized, preferably front-driven, tractor head (5) which is connected to the vehicle chassis (2).

## Revendications

1. Ensemble de plancher pour un châssis (2) de véhicule, l'ensemble de plancher (6) présentant au moins un support longitudinal (14) et un plancher inférieur (13),
le support longitudinal (14) étant disposé de manière flottante sur un dispositif de soutien (27) relié au plancher inférieur (13) et à distance au-dessus du plancher inférieur (13),
**caractérisé en ce que**
l'ensemble de plancher (6) peut être relié ou est relié frontalement à une tête de traction (5) motorisée et de préférence entraînée frontalement.

2. Ensemble de plancher selon la revendication 1,
**caractérisé en ce que** le support longitudinal (14) est soutenu sur le dispositif de soutien (27) et éventuellement fixé à ce dernier.

3. Ensemble de plancher selon les revendications 1 ou 2, **caractérisé en ce que** l'ensemble de plancher (6) reprend un ensemble (9) d'essieu arrière du véhicule (1).

4. Ensemble de plancher selon les revendications 1, 2 ou 3, **caractérisé en ce que** le dispositif de soutien (27) est formé par un ou plusieurs supports transversaux (15) et/ou par un soutien (28) d'un ensemble (9) d'essieu.

5. Ensemble de plancher selon la revendication 1,
**caractérisé en ce que** le ou les supports transversaux (15) sont disposés sur le plancher inférieur (13) et soutenus par ce dernier.

6. Ensemble de plancher selon l'une des revendications précédentes, **caractérisé en ce que** le support longitudinal (14) de l'ensemble de plancher (6) est disposé à distance latérale (S) des côtés frontaux du dispositif de soutien (27) et du bord latéral de l'ensemble de plancher (6).

7. Ensemble de plancher selon l'une des revendications précédentes, **caractérisé en ce que** le support longitudinal (14) est enfoncé dans le dispositif de soutien (27), les côtés supérieurs du support longitudinal (14) et du dispositif de soutien (27) étant situés essentiellement à la même hauteur.

8. Ensemble de plancher selon l'une des revendications précédentes, **caractérisé en ce que** l'ensemble de plancher (6) présente un plancher supérieur (12) disposé sur le support longitudinal (14) et/ou sur le dispositif de soutien (27).

9. Ensemble de plancher selon l'une des revendications précédentes, **caractérisé en ce que** le support longitudinal (14) est configuré comme profilé (21) à chambre creuse et en particulier comme profilé en chapeau.

10. Ensemble de plancher selon l'une des revendications précédentes, **caractérisé en ce que** l'ensemble de plancher (6) présente un adaptateur (7) qui assure la liaison solidaire avec la tête de traction (5) motorisée et de préférence entraînée frontalement, et en particulier avec son châssis de tête de traction.

11. Ensemble de plancher selon l'une des revendications précédentes, **caractérisé en ce que** le plancher inférieur (13) de l'ensemble de plancher (6) est rigidifié par un support de soutien de préférence continu sur sa longueur.

12. Ensemble de plancher selon l'une des revendications 8 à 11, **caractérisé en ce que** le plancher inférieur (13) de l'ensemble de plancher (6) présente une rigidité plus élevée que le plancher supérieur (12).

13. Ensemble de plancher selon l'une des revendications précédentes, **caractérisé en ce que** l'ensemble de plancher (6) est relié à l'arrière à un bâti arrière (3).

14. Châssis pour véhicule (1), en particulier pour véhicule routier, le châssis (2) de véhicule présentant un ensemble de plancher (6), **caractérisé en ce que** l'ensemble de plancher (6) est configuré selon l'une des revendications 1 à 13.

15. Véhicule, en particulier véhicule routier, qui présente un ensemble de plancher (6), **caractérisé en ce que** l'ensemble de plancher (6) est configuré selon l'une des revendications 1 à 13, le véhicule (1) présentant une tête de traction (5) motorisée, de préférence entraînée frontalement et reliée au châssis (2) du véhicule.
